# EUROPEAN PATENT APPLICATION

(11) **EP 2 014 999 A2**
(43) Date of publication of application: **14.01.2009**
(21) Application number: 08004457.1
(22) Date of filing: 11.03.2008
(51) Int. Cl.: F24J 2/05, F24J 2/24, F24J 2/50

(54) **Solar heating panel fabricated from multi-wall plastic sheets**

(30) Priority: 26.03.2007 US 920093 P; 21.02.2008 US 70792
(71) Applicant: Schaefer, Guenter, 65185 Wiesbaden (DE)
(72) Inventor: Schaefer, Guenter, 65185 Wiesbaden (DE)

(57) **Abstract**

A solar panel (10), through which a fluid is circulated, includes a transparent central panel (12), with a number of channels (14) extending through the panel (12) from one end to another. A manifold (18) is attached to each end of the transparent central panel (12) so that distributing chambers (16) within the manifolds (18) direct the fluid (15) to move between adjacent channels within the central panel (12). The solar panel (12) additionally includes a transparent support structure (46) above the central panel and a lower support structure (64) below the panel (12). Dark, opaque material (66) below the central panel absorbs heat and warms the fluid (15).

## Description

### CROSS REFERENCE TO A RELATED APPLICATION

This application claims the benefit of U.S. Provisional Application No. 60/920,093, filed 03/26/2007.

### FEDERALLY SPONSORED RESEARCH OR DEVELOPMENT

Not Applicable

### BACKGROUND OF THE INVENTION

1. Field of the Invention

This invention relates to solar panels, and, more particularly, to solar panels including multi-layer translucent plastic sheets, known as multi-wall sheets, having an array of tunnels formed in the direction of extrusion, through which a fluid flows to be heated by solar radiation.

2. Summary of the Background Art

Solar water heaters have been installed for many years, but have not become very popular because they require a quite large investment, which amortizes over a very long time. Because of the high expenses involved, many people cannot afford such a system, as the return ratio involves excessive time, even when such a project is financed. Since the present designs of the solar water heating panels require materials and equipment that is not readily available in many places worldwide, shipping makes these products even more expensive and out of reach for many people. In particular, prior-art solar panel designs require a heavy frame surrounding flexible panel elements.

What is needed is a low-cost solar water heating panel, that is highly efficient, light weight, easy to handle and can be manufactured in almost any place worldwide.

U.S. Pat. Appl. Pub. No. 2007/0186922 A1 describes a A panel for generating electrical and thermal power comprises an upper layer formed by a translucent sheet having an array of photovoltaic cells and a support structure including a pair of multi-walled translucent sheets, and an underlying reflective sheet. The multi-walled translucent sheets each include a number of elongated channels, with the two sheets being arranged so that their channels lie perpendicular to one another for rigidity. The channels within at least one of the sheets are filled with circulating water, which is heated by solar energy not absorbed within the photovoltaic cells.

### SUMMARY OF THE INVENTION

According to one aspect of the invention, a solar panel is provided, including a transparent central panel a pair of manifolds, a transparent upper support panel, a lower support panel, a dark, opaque structure extending under the transparent central panel, and a side cover extending upward and downward from each side of the transparent central panel. The pair of manifolds includes a manifold fastened to extend along each end of the transparent central panel. Each manifold includes a plurality of distributing chambers, each of which connects a plurality of adjacent channels within the translucent central panel. The pair of manifolds includes a pair of ports. The distributing chambers are located so that two of the distributing chambers are connected by adjacent channels in the transparent central sheet to one of the ports and to one of the distributing chambers in the manifold at the opposite end of the transparent central panel. and so that each of the remaining distributing chambers are each connected by adjacent channels within the transparent central panel to a pair of adjacent distributing chambers in the manifold at the opposite end of the central transparent panel.

As the terms are used herein, the upper side of the solar panel is the side facing the sun, and the upward direction is perpendicular to the panels within the solar panel, in the general direction of the sun.

The distributing chambers in either of the manifolds may consist of an even number of distributing chambers, with one of the ports being located in each of the manifolds. Alternately, the distributing chambers in either of the manifolds may consist of an odd number of distributing chambers, with both of the ports being located within one of the manifolds.

Both the transparent central panel and the outer support panels may be formed from a plastic multi-wall sheet of uniform thickness including a number of internal, parallel channels. Alternately, the transparent central panel may be formed as an integral part with the side walls, or the support structures may each be formed using a slotted panel having a number of legs adhesively attached to the transparent central panel. The upper support panel and the transparent central panel may include a web having a number of sections shaped to concentrate light within a fluid in the channels within the central transparent panel.

Preferably, each of the manifolds includes at least one dead air space. The manifolds may be attached to the upper and lower support structures by screws extending through clearance holes within edges of the support structures to engage threaded holes within brackets extending within channels in the support structures.

### BRIEF DESCRIPTION OF THE FIGURES

FIG. 1 is a cross-sectional plan view of a solar panel made in accordance with a first embodiment of the invention, taken through a central multi-wall plastic sheet therein;

FIG. 2 is a cross sectional side isometric view of the solar panel of FIG. 1;

FIG. 3 is an end elevation of either end of the solar panel of FIG. 1;

FIG. 4 is a cross-sectional side elevation of the solar panel of FIG. 1, taken as indicated by section lines 4-4 therein;

FIG. 5 is a cross-sectional end elevation of the solar panel of FIG. 1, taken as indicated by section lines 5-5 therein;

FIG. 6 is a cross-sectional isometric view of a version of the solar panel of FIG 1 having alternative manifolds;

FIG. 7 is a cross-sectional side elevation of a version of the solar panel having thicker outer multi-wall sheets;

FIG. 8 is a cross-sectional end elevation of a version of the solar panel having outer multi-wall sheets spaced apart from a central multi-wall sheet;

FIG. 9 is an isometric view of the solar panel of FIG. 6;

FIG. 10 is isometric view of a solar panel, built in accordance with a second embodiment of the invention to have manifolds attached by screws;

FIG. 11 is an isometric view of multi-wall sheets within the solar panel of FIG. 10.

FIG. 12 is a fragmentary cross-sectional side view of a version of the solar panel of FIG. 10 having alternative manifolds;

FIG. 13 is a fragmentary, exploded isometric view of an alternative structure for mounting side covers within the solar panel of FIG. 10;

FIG. 14 is an isometric view of a central panel structure, for alternative use within the solar panel of FIG. 10, shown in an exploded relationship with outer multi-wall sheets therein;

FIG. 15 is an isometric view of an outer support structure including a pair of slotted outer panels, shown in an exploded relationship with a central multi-wall sheet within an alternative version of the solar panel of FIG. 10;

FIG. 16 is an end view of a slotted panel having a web with convex sections for use in the apparatus of FIG. 15;

FIG. 17 is an end view of a slotted panel having a web with concave sections for use in the apparatus of FIG. 15;

FIG. 18 is am end view of a ,multi-wall sheet having convex sections for use in the solar panel of FIG. 10;

FIG. 19 is an isometric view of a solar panel built in accordance with a third embodiment of the invention to include both ports at the same end of the solar panel; and

FIG. 20 is a cross-sectional plan view of the solar panel of FIG. 19.

### DETAILED DESCRIPTION OF THE INVENTION

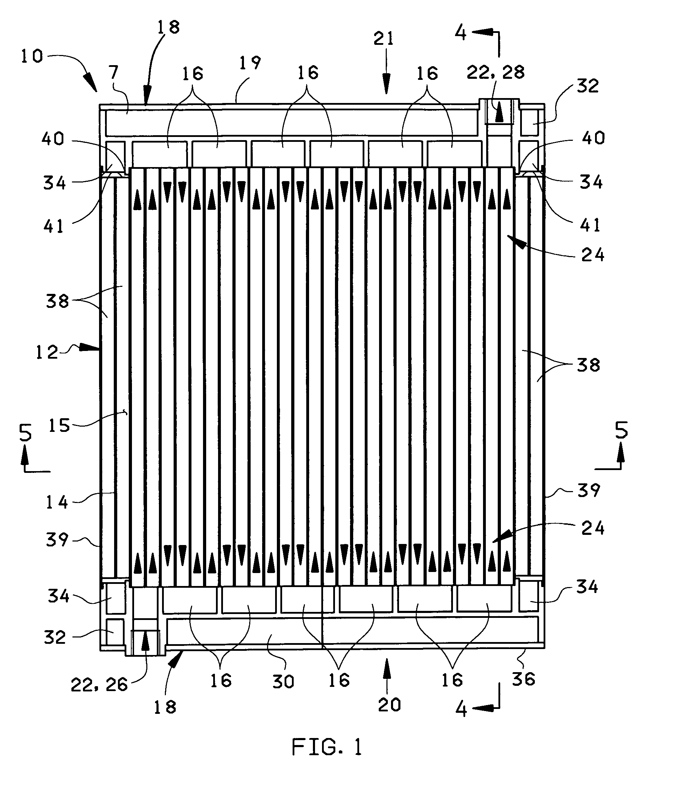

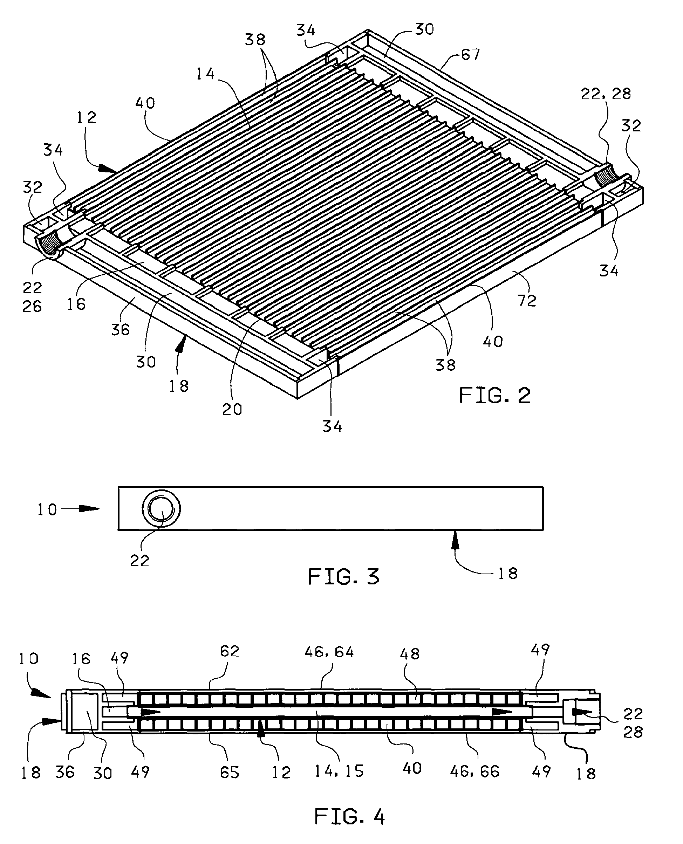

Various internal features of a solar panel 10, built in accordance with a first embodiment of the invention, will now be discussed, with reference being made to FIGS. 1 and 2, both of which are cross sectional views taken along a central horizontal plane within the solar panel 10. FIG. 1 is a cross-sectional plan view thereof, while FIG. 2 is a cross-sectional isometric view thereof. The solar panel 10 includes a central multi-walled panel 12, having a number of rectangular channels 14 through which a fluid 15 is circulated in a pattern determined by the location of distributing cavities 16 within a manifold 18 adhesively attached at each end 20 of the panel 12. Each of the manifolds 18 additionally includes a port 22. In accordance with the first embodiment of the invention, each of the manifolds 18 includes an even number of distributing channels 16, so that the fluid 15 enters the multi-wall panel from a first end 20 and exits from the opposite end 21, with, the two manifolds 18 being identical parts, fastened to the central multi-walled panel 12 in opposing orientations. As shown by the arrows 24 in FIG. 1, which indicate the directions of fluid flow, within the panel 10, fluid flow establishes one of the ports 22 as an inlet port 26, while the other port 22 becomes an outlet port 28.

In the example of FIGS. 1 and 2, each of the ports 22 is connected with two of the channels 14, while each of the distributing cavities 16 is connected with four of the channels 14. The distributing chambers 16 are located so that two of the distributing chambers 16 are connected by adjacent channels 14 in the central multi-wall sheet to one of the ports 22 and to one of the distributing chambers 16 in the manifold 18 at the opposite end of the t central multi-wall sheet 12..and so that the remaining distributing chambers 16 are each connected by adjacent channels 14 within the central multi-wall sheet 12 to a pair of adjacent distributing chambers 16 in the manifold 18 at the opposite end of the central multi-wall sheet 12.

Each of the manifolds 18 additionally includes a central outer cavity 30, an outer end cavity 32, and inner end cavities 34, all of which are enclosed by outer walls 36 to form dead-air spaces providing thermal insulation separating the fluid circulating within the solar panel 10 from ambient conditions. Additional thermal insulation is provided by dead air spaces within two outermost channels 38 at each side 39 of the central multi-walled panel 12. Preferably, the manifolds 18 are aligned with the central multi-wall sheet 12 by means of ribs 40 within the manifolds 18 extending into notches 41 within the sheet 12.

FIG. 3 is an end elevation of either end of the solar panel 10, showing a port 22 extending from a manifold 18.

FIG. 4 is a cross-sectional side elevation of the solar panel 10, taken as indicated by section-lines 4-4 in FIG. 1, showing a single channel 14 of the central multi-wall sheet 12. To minimize the transmission of heat to the outer multi-wall sheets 46, having channels 48, are adhesively bonded to both surfaces of the central multi-wall sheet 12 so that the channels 48 form air spaces thermally insulating the fluid 15. Preferably, to maximize strength and rigidity, the multi-wall sheets 46 are oriented so that the channels 48 within both outer multi-wall sheets extend perpendicularly to the channels 14 in the central sheet 12. For example, the outer multi-wall sheets 12, 46 are composed of standard material having an overall thickness of 10 mm or 16 mm. Cavities 46 within the manifolds 18, extending on opposite sides of the distributing cavities 16, form air spaces further thermally insulating the fluid 15 within the panel 10.

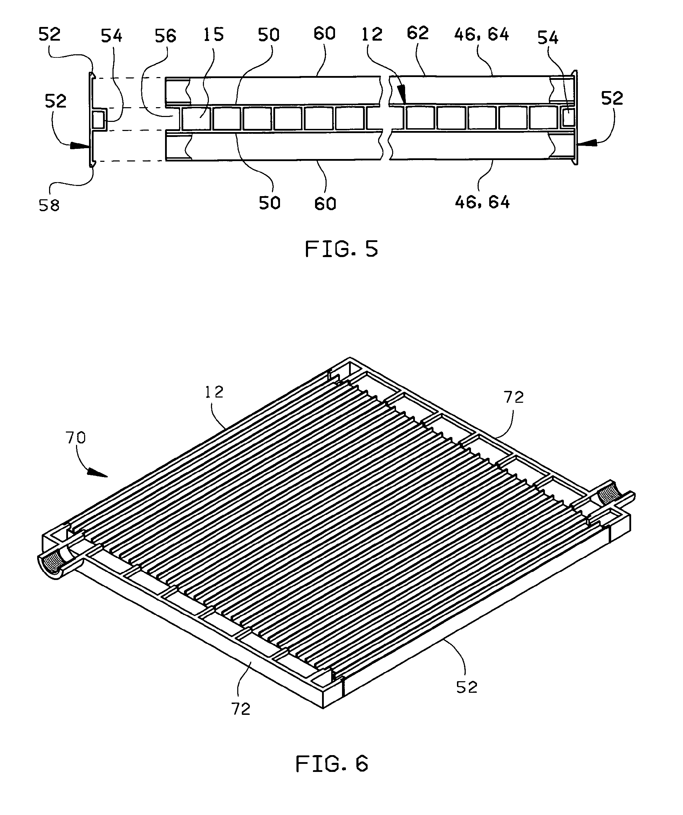

FIG. 5 is a cross-sectional end elevation of the solar panel 10, taken as indicated by section lines 5-5 in FIG. 1, showing the outer multi-wall sheets 46 adhesively attached to opposite sides 50 of the central multi-walled sheet 12, and additionally showing a pair of side covers 52, one of which is shown in an exploded relationship with the multi-wall sheets 12, 46. For example, the side covers 52 are adhesively attached to the multi-wall sheets 12, 46. Each of the side covers 52 includes a central rib 54 fitting within a portion 56 of an outermost channel 48 remaining after the central multi-walled sheet 12 is cut to size. Additionally, each of the side covers 52 includes a pair of outer ribs 58 extending outwardly adjacent the outer surfaces 60 of the outer multi-wall sheets 46.

Preferably, the solar panel 10 is oriented with a first side 62 facing the sun, and with a first outer multi-wall sheet 64 and the central multi-wall sheet 12 are composed of transparent materials, and with the second outer multi-wall sheet 66 composed of a dark opaque material. In this way, solar radiation is allowed to travel through the multi-walled sheets 64, 12 to heat the fluid 15 within the multi-wall sheet 12, while solar radiation traveling through the multi-wall sheets 64, 12 and the fluid 15 is mostly absorbed within the second outer multi-wall sheet 66 to further heat the fluid 15. Alternately, the lower side 65 of the central sheet 12 may be coated with a dark, opaque material.

Preferably, the fluid 15 is water, which may include additives. For example a pigment may be included to improve the absorption of radiated heat, or an anti-freeze additive may be included to prevent freezing of the fluid 15 during periods when the solar panel 10 is not being used, such as at night. Alternately, the fluid may be another liquid, a gas, or a fluid that changes from a liquid to a gas when heated within the solar panel 10.

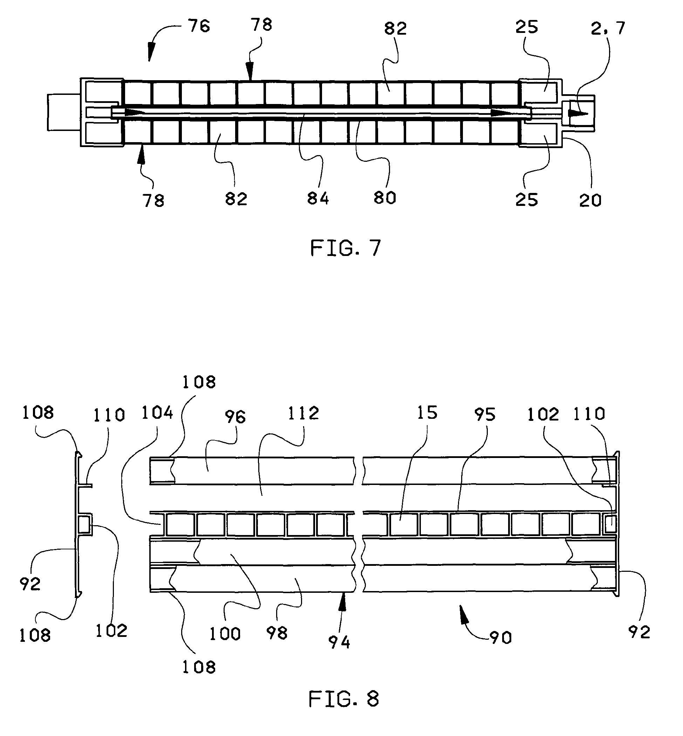

Variations in the form of cavities provided to improve the thermal insulation of the fluid 15 within the solar panel will now be discussed, with reference being made to FIGS. 6-8. FIG. 6 is a cross-sectional isometric view of a solar panel 70, which has been shortened by eliminating the outer structures 36 forming the cavities 30, shown in FIG. 1, from alternative manifolds 72. FIG. 7 is a cross-sectional side elevation of a solar panel 76, which includes outer multi-wall sheets 78 having a substantially greater thickness than the central multi-wall sheet 80, with the larger channels 82 within the sheets 78 providing more effective thermal insulation of the fluid 84 within the central multi-walled sheet 80.

For example, FIG. 8 is a cross-sectional end elevation of a solar panel 90, having side covers 92, one of which is shown in an exploded relationship with the central portion 94 of the solar panel 90. The central portion 94 includes a central multi-wall sheet 95, filled with the fluid 15, a first outer multi-wall sheet 96, a second outer multi wall-sheet 98, and a spacing multi-wall sheet 100, with the central sheet 95, the spacing sheet 100, and the second outer sheet 98 being adhesively attached to one another. Generally as described above in reference to FIG. 5, each of the side covers 92 is adhesively attached to the multi-wall sheets 96, 98, 100, with a first rib 102 extending into a space 104 within the central multi-wall sheet 95 and with outer ribs 106 extending along outer surfaces 108 of the outer multi-wall sheets 96, 98. Each of the side covers 92 additionally includes a support rib 110 holding the first outer multi-wall sheet outer multi-wall sheet 96 in a position spaced-away from the central multi-wall sheet 95, so that a space 112 is formed between the multi-wall sheets 95, 96.

For example, the solar panel 90 is oriented with the first outer multi-wall sheet 96 facing the sun, with the first outer multi-wall sheet 96 and the central multi-wall sheet 95 being composed of a transparent material, and with the spacing multi-wall sheet 100 being composed of a dark opaque material. The space 112 provides an air space, through which radiant energy easily travels inward, in the direction of arrow 114 to warm the fluid 15, while a convective or conductive flow of heat outward, opposite the direction of arrow 114 is largely prevented. The opaque spacing sheet 100 absorbs radiant energy, additionally warming the fluid 15.

Alternately, the solar panel 90 is oriented with the second multi-wall sheet 98 facing the sun, with the multi-wall sheets 98, 100, and 95 all being composed of a transparent material, allowing radiant energy to warm the fluid 15, and with the space 112 being filled with an opaque insulating material (not shown)l, which is warmed by exposure to radiant energy, but which prevents the conductive transfer of heat from the warmed fluid 15.

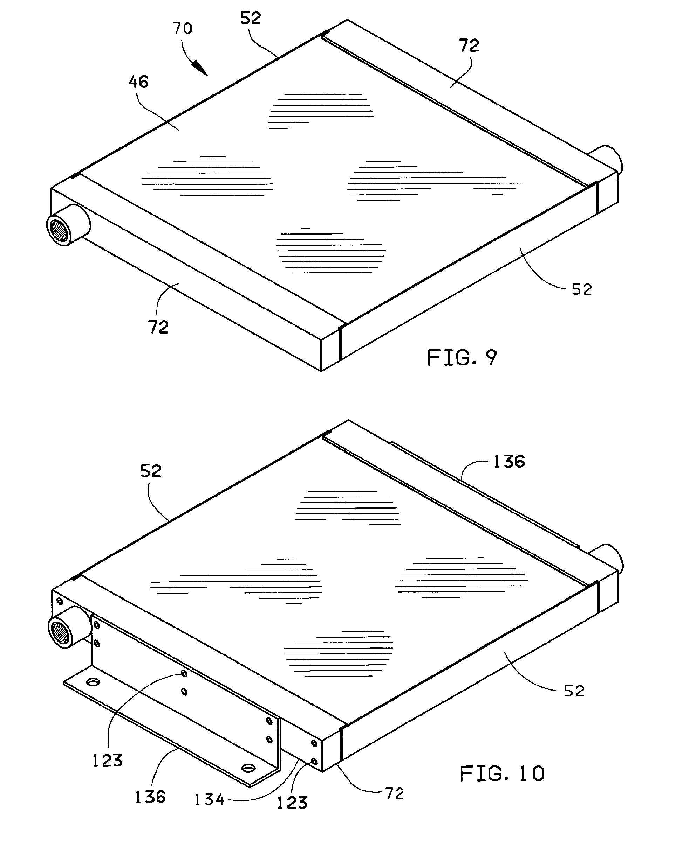

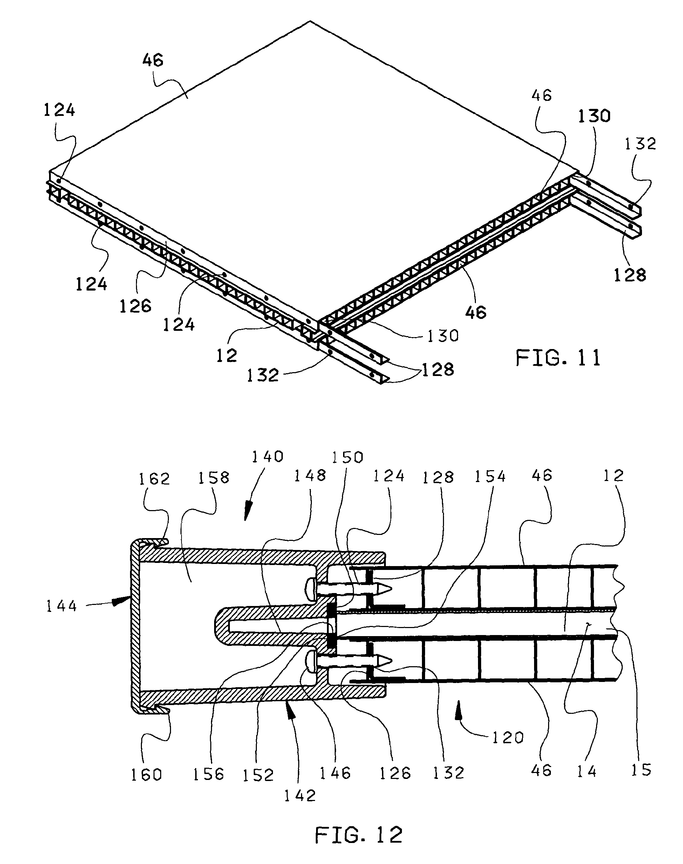

Alternate methods for fastening manifolds to multi-wall sheets will now be discussed, with reference being made to FIGS. 9-13. FIG. 9 is an isometric view of the solar panel 70, previously shown in FIG. 6, having the manifolds 72 and the side covers 52 adhesively attached to a pair of outer multi-wall sheets 46 and to a central multi-wall sheet 12 (shown in FIG. 6). FIGS. 10 and 11 show a solar panel 120, built in accordance with a second embodiment of the invention, in which the manifolds 122 are each fastened to the multi-wall sheets 46, 12 by a number of screws 123. FIG. 10 is an isometric view of the solar panel 120, while FIG. 11 is an isometric view of the multi-wall sheets 46, 12 therein. An array of clearance holes 124 is provided in the ends 126 of the outer multi-wall sheets 46, and a pair of brackets 128, extending within the outer channel 130 and having threaded holes 132 aligned with the clearance holes 124, are provided for engaging the screws 124. The screws 123 may additionally hold a cover 134, forming a portion of the manifold 72 in place. As also shown in FIG. 10, some of the screws 123 may be used to attach one or more mounting brackets 136 to the solar panel 120.

FIG. 12 is a fragmentary cross-sectional side view of the solar panel 120 having the manifolds 122 replaced with a pair of alternate manifolds 140, one of which is shown in the figure. Each of the alternate manifolds 140 includes a manifold housing 142 and a manifold cover 144. The manifold housing 146 is fastened to the outer multi-wall sheets 46 by means of a number of screws 146 extending through clearance holes 124 in the ends 126 of the outer multi-wall sheets 46 to engage threaded holes 132 in the brackets 128. The manifold housing 142 includes a number of distributing cavities 148, which connect adjacent channels 14 within the central multi-walled sheet 12 in the manner described above regarding distributing cavities 16 of FIG. 1. The alternate manifold 140 additionally includes an elastomeric gasket 150, held within a slot 152 of the housing 142 to be compressed against an end 154 of the central multi-wall sheet 12. The gasket 155 include a number of slots 156, aligned with the distributing cavities 148, allowing the fluid 15 to flow into and out of the distributing cavities 148 while preventing the outward flow of the fluid 15 from the end 154 of the sheet 12. The manifold cover 144 extends across a cavity 158 within the housing 142, forming a dead air space within the manifold 140 to provide thermal insulation of the fluid 15 form ambient air. The manifold cover 144 is held in place by a pair of flexible latches 160 engaging latching surfaces 162.

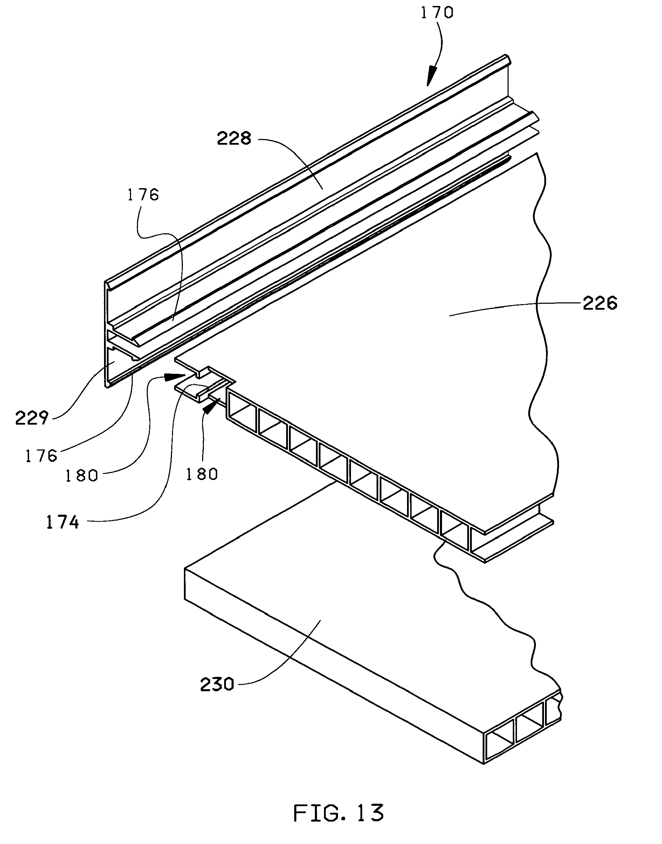

FIG. 13 is a fragmentary, exploded isometric view of alternative side wall attachment structures 170 for use within the solar panel 120. An alternative central multi-walled sheet 172 is provided with an edge slot 174, extending along each side 176 of the sheet 172. An alternative side cover 178 is provided with a pair of flexible latches 180, which are snapped into engagement with the edge slot 174 to hold the side cover 178 in place along the side 176 of the central sheet 172. This attachment structure 170 may be used with or without adhesive attachment of the central sheet 172 to the side covers 178. In this regard, it is noted that, since the outer channels 180 within the central multi-wall sheet 172 do not hold the fluid 15, a water-tight seal is not needed between the central sheet 172 and the side covers 178.

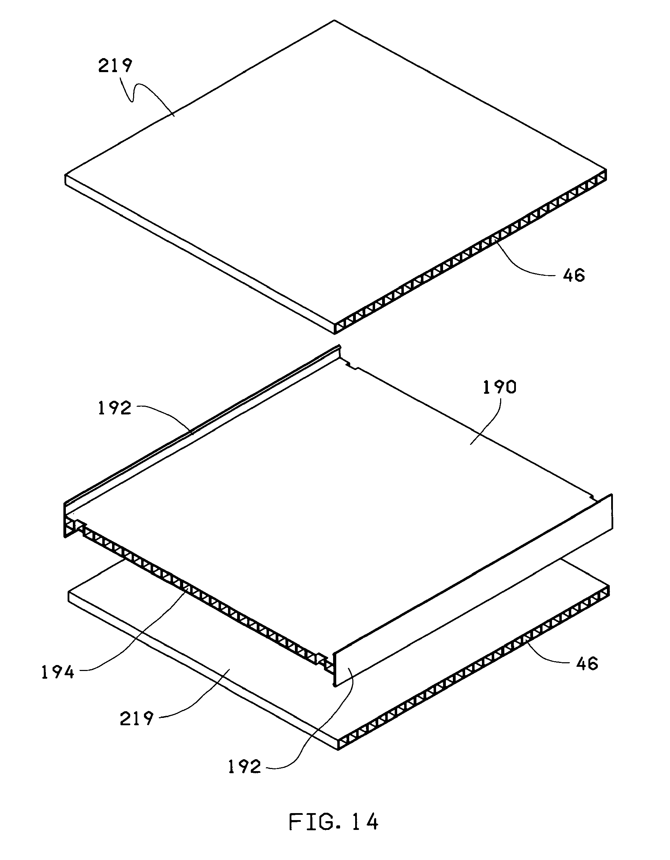

FIG. 14 is an isometric view of a central panel structure 190, shown in an exploded relationship with outer multi-wall sheets 46, for replacing the central multi-wall sheet 12 and side walls 52 within the solar panel 120. The central panel structure 190 is an integral structure including side wall portions 192 and a plurality of channels 194.

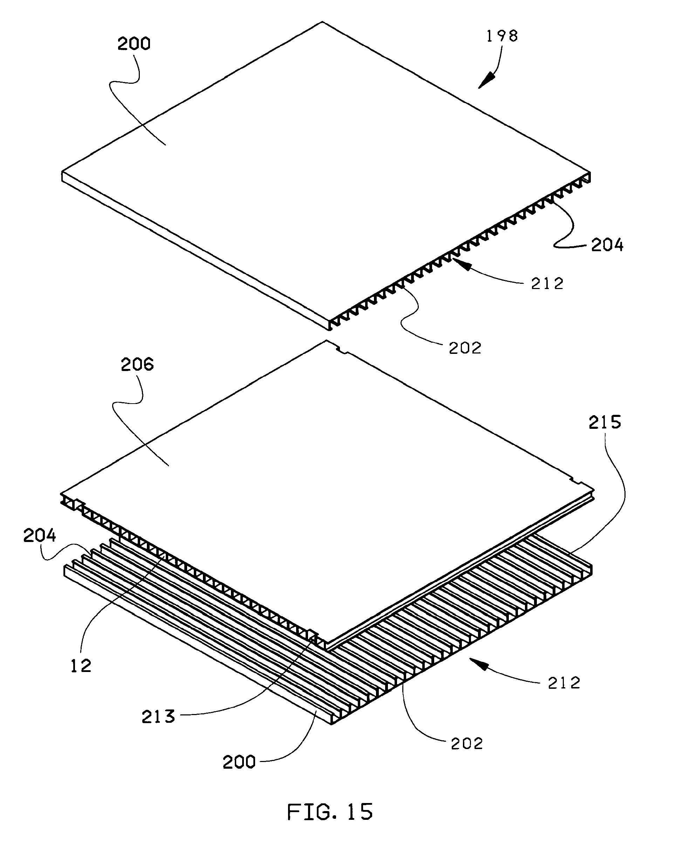

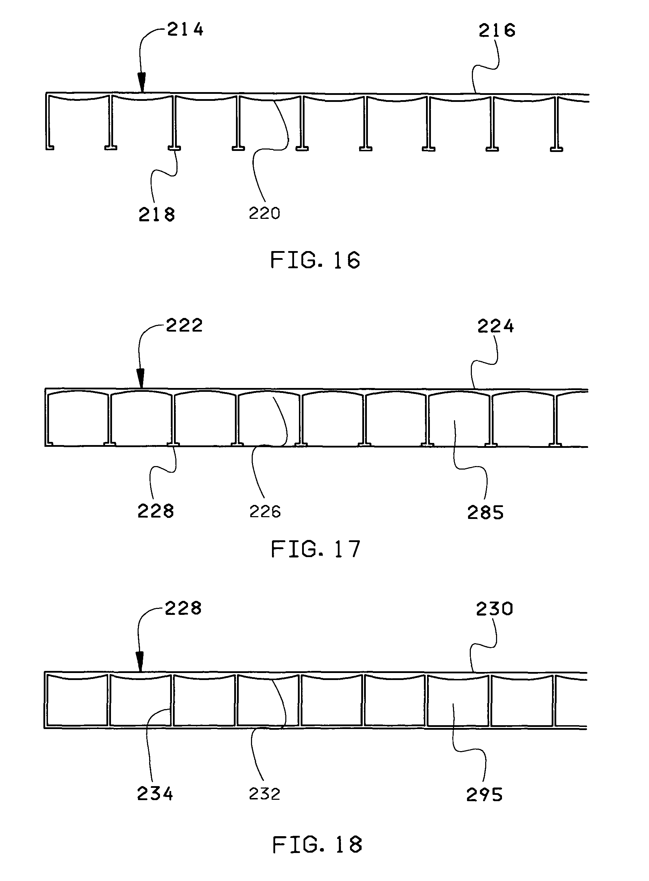

FIG. 15 is an isometric view of an outer support structure 198 for use within an alternative version of the solar panel 120. The outer support structure 198 includes a pair of slotted outer panels 200, shown in an exploded relationship with the central multi-wall sheet 12. Each of the slotted panels 200 includes a web 202 and a number of legs 204, which are adhesively bonded to the adjacent surfaces 206 of the central sheet 12 to form closed channels from the spaces 212 between the legs 204. The slotted outer panel 200 is understood to be less expensive to manufacture than an outer multi-wall sheet 16 because individual mandrels are not required to form enclosed cavities in the extrusion process. FIG. 16 is a fragmentary end view of an alternative slotted outer panel 214 having a web 216 including convex sections 220 disposed between adjacent legs 218. Similarly, FIG. 17 is a fragmentary end view of an alternative slotted outer panel 222 including a web 224 having concave sections 226 disposed between legs 228. Either of the alternative slotted outer panels Either of the alternative slotted outer panels 214, 222 may be applied within the outer support structure 198 in place of the slotted outer panel 200 facing the sun, so that radiant energy is concentrated on the fluid 15 within the multi-wall sheet 12 according to a preferred pattern.

The concept of providing a web having convex or concave sections to provide a preferred pattern in which radian energy is concentrated can also be applied to the closed channels within a multi-wall sheet 12, 46, or within the central panel structure 190, described above in reference to FIG. 14. For example, FIG. 18 is a fragmentary end view of a multi-wall sheet 228 having an upper web 230 with convex sections 232 disposed between adjacent interior walls 234. This multi-wall sheet 228 can be used within the solar panel 120 in place of the central multi-wall sheet 12, with the web 230 facing the sun, or in place of the outer multi-wall sheet 46 facing the sun, with the web 230 turned in either direction.

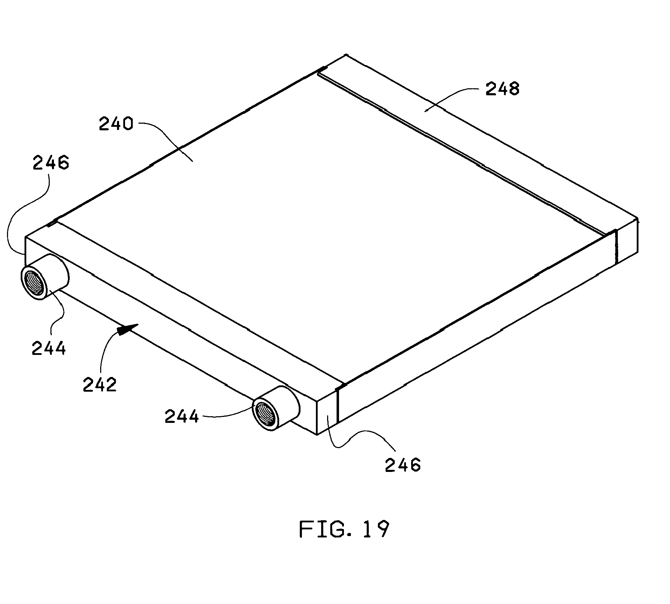

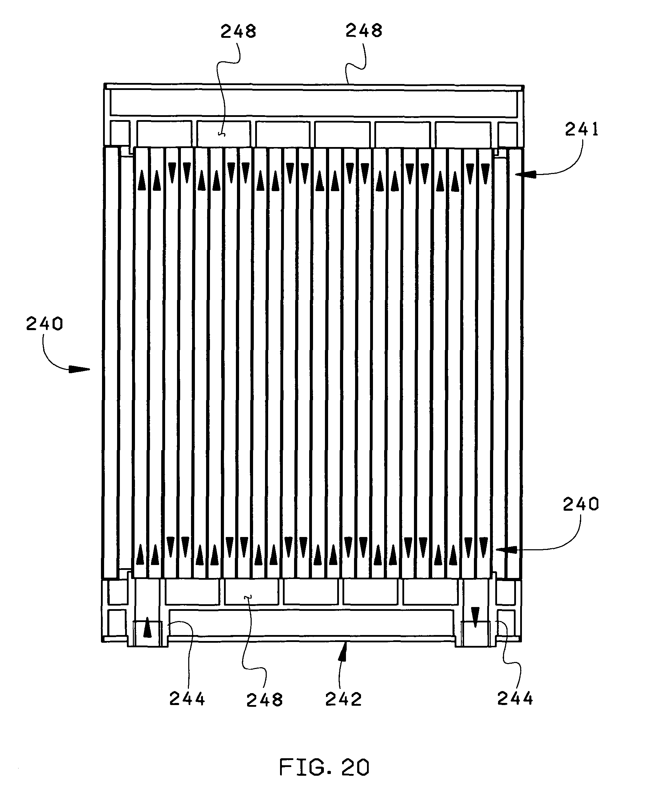

FIGS. 19 and 20 show a solar panel 240 built in accordance with a third embodiment of the invention, with FIG. 19 being an isometric view thereof, and with FIG. 20 being a cross-sectional plan view thereof. Arrows 241 show the directions in which a fluid 15 flows through the solar panel 240. The solar panel 240 includes a first manifold 242 having a port 244 at each end 246 of the manifold 242, and a second manifold 248 having no port 244. This configuration has an advantage of allowing pipes (not shown) carrying the fluid 15 into and away from the solar panel 240 to be attached at the same end 246 of the panel 240. Preferably, each of the manifolds, allowing the solar panel 240 the extend away from all plumbing connections. Both of the manifolds 242, 244 have an odd number of distributing cavities 248, so that the fluid 15 enters and leaves a central multi-walled sheet 250 from the same side 252 thereof.

It is understood that various features of one embodiment described herein may be readily applied to one of the other embodiments. For example, the central panel structure 190, described above in reference to FIG. 14 as being used within the solar panel 120, can be used, in accordance with the present invention, in a solar panel otherwise having the features of the solar panel 10 or the solar panel 240. A solar panel built in accordance with any such combination of the features described above has a particular advantage over prior-art solar panels in that strength and rigidity is derived from the various elements of the solar panel itself, i.e. from the multi-wall sheets, the manifolds, and the side walls, so an external frame is not required.

While the invention has been described in terms of preferred embodiments and versions with some degree of particularity, it is understood that this description has been given only by way of example, and that many change can be made without departing from the spirit and scope of the invention, as defined in the appended claims.

## Claims

1. A solar panel comprising:
a transparent central panel including a pair of ends opposite one another, a pair of sides opposite one another and perpendicular to the pair of ends, and plurality of channels extending between the pair of ends;
a pair of manifolds, including a manifold fastened to extend along each end of the transparent central panel, wherein each manifold includes a plurality of distributing chambers, each connecting a plurality of adjacent channels within the plurality of channels in the transparent central panel, wherein the pair of manifolds includes a pair of ports, wherein the distributing channels within the pair of manifolds are located so that two distributing chambers in the plurality of distributing chambers are connected by adjacent channels within the transparent central panel to one of the ports and one of the distributing chambers located adjacent an opposite side of the transparent central panel, and so that the remaining distributing chambers in the plurality of distributing chambers are connected by adjacent channels within the transparent central panel to a pair of adjacent distributing channels adjacent an opposite end of the transparent central panel,
a transparent upper support panel extending above the transparent central panel to enclose a plurality of dead air spaces above the transparent central panel;
a lower support panel extending below the transparent central panel to enclose a plurality of dead air spaces below the transparent central panel;
a dark, opaque structure extending under the transparent central panel; and
a side cover extending upward and downward from each side of the transparent central panel to engage outer edges of the upper and lower support structures.

2. The solar panel of claim 1, wherein
all of the distributing chambers in either of the manifolds comprise an even number of distributing chambers,
each of the manifolds includes one of the ports; and
the manifolds are formed as identical and oppositely oriented on the ends of the transparent central structure.

3. The solar panel of claim 1, wherein
all of the distributing chambers in either of the manifolds comprise an odd number of distributing chambers,
one of the manifolds includes both of the ports.

4. The solar panel of claim 1, wherein the side covers and the transparent central panel are formed as a single, integral part.

5. The solar panel of claim 1, wherein each of the manifolds encloses at least one dead air space.

6. The solar panel of claim 1, wherein the manifolds are attached to the upper and lower support structures by screws extending through clearance holes within edges of the upper and lower support structures to engage threaded holes within brackets extending within channels in the support structures.

7. The solar panel of claim 1, wherein the lower support structure is dark and opaque.

8. The solar panel of claim 1, wherein the upper and lower support panels each comprise a panel including a plurality of channels extending perpendicular to the channels within the transparent central panel.

9. The solar panel of claim 1, wherein the upper and lower support panels each comprise a panel including a plurality of legs adhesively attached to an adjacent surface of the central transparent panel and a web connected to each of the legs to extend along a side of the support panel opposite the transparent central panel.

10. The solar panel of claim 1, wherein upper support panel and the transparent central panel together include a web having a number of sections shaped to concentrate light within a fluid in the channels within the central transparent panel.

11. The solar panel of claim 1, wherein at least one of the support panels is held by side covers spaced away from the transparent central panel.
